# EUROPÄISCHE PATENTSCHRIFT

(11) **EP 3 771 019 B1**
(45) Veröffentlichungstag und Bekanntmachung des Hinweises auf die Patenterteilung: **11.09.2024**
(21) Anmeldenummer: 20184236.6
(22) Anmeldetag: 06.07.2020
(51) Int. Cl.: H01M 10/42, H01M 10/48, H02J 7/00, B60L 58/18, H02J 1/08, B60L 1/00, B60L 3/00, B60L 58/20, B60L 58/24, H02J 9/00

(54) **ELEKTRISCHES ENERGIESPEICHERSYSTEM UND VERFAHREN ZU DESSEN BETREIBEN**
ELECTRICAL ENERGY STORAGE SYSTEM AND METHOD FOR THE OPERATION THEREOF
SYSTÈME ÉLECTRIQUE D'ACCUMULATION D'ÉNERGIE ET SON PROCÉDÉ DE FONCTIONNEMENT

(30) Priorität: 22.07.2019 DE 102019210793
(43) Veröffentlichungstag der Anmeldung: 27.01.2021
(73) Patentinhaber: Robert Bosch GmbH, 70442 Stuttgart (DE)
(72) Erfinder: Imre, Arpad, 71665 Vaihingen (DE); Schoenfelder, Herbert, 71679 Asperg (DE)

(56) Entgegenhaltungen:
- DE-A1- 102012 003 309
- DE-A1- 102014 006 746
- DE-A1- 102015 106 773

## Beschreibung

Die Erfindung geht aus von einem elektrischen Energiespeichersystem, einem Verfahren zum Betreiben eines elektrischen Energiespeichersystems sowie einer Verwendung des elektrischen Energiespeichersystems gemäß dem Oberbegriff der unabhängigen Ansprüche.

### Stand der Technik

Für die Versorgung von elektrischen Nebenaggregaten in herkömmlichen Fahrzeugen ist ein Generator und eine 12V Blei-Säure-Batterie installiert. Diese Batterie versorgt auch die notfallrelevanten und gesetzlich vorgeschriebenen Verbraucher, wie beispielsweise Warnblinkanlage, Airbag oder Warnmelder-Steuergerät des Fahrzeugs. In neuen Hybrid- und Elektrofahrzeugen (mHEV, sHEV, PHEV) ist zusätzlich zu der Blei-Säure-Batterie eine leistungsfähigere Batterie und/oder eine Batterie mit größerer Kapazität zu Antriebszwecken und Rekuperationsvorgängen installiert. Diese Batterie, häufig eine Lithium-Ionen-Batterie, ist meistens so dimensioniert, dass die Versorgung von notfallrelevanten 12V Verbrauchern und anderen Verbrauchern möglich ist.

Im Gegenteil zu Blei-Säure Batterien, besitzt die Lithium-Ionen-Batterie eine so genannte Batterie-Trenneinheit. Diese Trenneinheit ist in der Lage bei Überladung, Überhitzung, Kurzschluss sowie Tiefentladung die Batteriezellen der Batterie von angeschlossenen Verbrauchern zu trennen, um die Batterie zu schützen. Durch die Trennung wird eine Ausgasung, ein Feuer oder eine Explosion der Batterie verhindert.

Nach dem Stand der Technik ist die Trenneinrichtung so konfiguriert, dass bei einer potentiellen Gefährdung der Leistungsausgang mit dem elektrischen Antrieb sowie die Verbraucher von der Batterie komplett elektrisch getrennt werden. Aufgrund dieser Abschalteinrichtung ist eine Versorgung von notfallrelevanten Verbrauchern nicht gesichert. Daher wird in aktuellen Hybrid- und Elektrofahrzeugen eine zusätzliche herkömmliche 12V Batterie verbaut.

Das Dokument DE 10 2013 204 238 A1 offenbart eine Vorrichtung zur stabilisierenden Versorgung eines im Normalbetrieb aus einem Energiespeicher versorgten Verbrauchers aus einem Pufferspeicher. Die Vorrichtung umfasst einen Gleichspannungswandler, eine Mehrzahl von steuerbaren Schaltelementen und eine Steuereinheit zur Steuerung des Schaltzustands der Mehrzahl an steuerbaren Schaltelementen in Abhängigkeit einer Eingangsspannung der Vorrichtung. Die Vorrichtung ist dazu ausgebildet, den Verbraucher im Normalbetrieb unter Umgehung von Verlustleistung aufweisenden Komponenten direkt aus dem Energiespeicher zu versorgen, wenn die Eingangsspannung größer als eine vorgegebene erste Grenzspannung ist, wobei die erste Grenzspannung eine Mindestspannung des Verbrauchers zu dessen Versorgung ist; den Verbraucher über den aus dem Energiespeicher gespeisten Gleichspannungswandler zu versorgen, wenn die Eingangsspannung unter die erste vorgegebene Grenzspannung sinkt, wobei der Gleichspannungswandler die Eingangsspannung auf eine Betriebsspannung des Verbrauchers wandelt; und den Gleichspannungswandler aus dem Pufferspeicher zu speisen, wenn die Eingangsspannung unter eine zweite vorgegebene Grenzspannung sinkt bis eine Spannung des Pufferspeichers die zweite vorgegebene Grenzspannung erreicht, wobei die zweite vorgegebene Grenzspannung eine Mindestspannung des Gleichspannungswandlers zu dessen Betrieb ist.

Das Dokument KR 10-1571110 offenbart ein tragbares Notstromversorgungsgerät, das in der Lage ist, eine Spannung aus einer entladenen Batterie eines Fahrzeugs für kurze Zeit aufzuladen und gleichzeitig dem Fahrzeug Notstrom zuzuführen. Die tragbare Notstromversorgungsvorrichtung umfasst einen ersten Anschluss, der mit einem Anodenanschluss der entladenen Batterie des Fahrzeugs verbunden ist, einen zweiten Anschluss, der mit einem Kathodenanschluss der entladenen Batterie verbunden ist, und einen Anschluss an mindestens eine hochkapazitive Speichervorrichtung, die mit dem zweiten Anschluss verbunden ist.

Das Dokument DE 10 2015 106 773 A1 offenbart ein Batteriesystem zum Bereitstellen mehrerer Spannungsniveaus für eine entsprechende Mehrzahl an Lastabnehmern mit mindestens einer Batterie, die eine Mehrzahl von Teilbatterien aufweist.

Das Dokument DE 10 2014 006 746 A1 offenbart eine Vorrichtung und ein Verfahren zur Bereitstellung von elektrischer Energie durch eine Vielzahl von aufladbaren Batteriezellen oder sonstigen aufladbaren Speichermodulen.

Das Dokument DE 10 2012 003 309 A1 offenbart ein elektrisches Energiesystem in einem Kraftfahrzeug, umfassend eine Hochspannungsseite (HSS) und eine Niederspannungsseite (NSS), wobei auf der Hochspannungsseite (HSS) mindestens eine Spannungsquelle angeordnet ist und auf der Niederspannungsseite (NSS) elektrische Bordnetzverbraucher (4) angeordnet sind, wobei die Hochspannungsseite (HSS) und die Niederspannungsseite (NSS) über eine DC/DC-Wandler verbunden sind.

Es ist eine Aufgabe der vorliegenden Erfindung, eine sichere Versorgung von allen notfallrelevanten Verbrauchern aus einer Hoch-Energie-Batterie und/oder Hoch-Leistungs-Batterie sicherzustellen sowie den Stand der Technik weiter zu verbessern. Diese Aufgabe wird gelöst durch die Merkmale der unabhängigen Ansprüche.

### Offenbarung der Erfindung

### Vorteile der Erfindung

Die Aufgabe wird erfindungsgemäß durch die Merkmale der unabhängigen Ansprüche gelöst. Dazu umfasst das elektrochemische Energiespeichersystem:
- Eine Mehrzahl von elektrochemischen Energiespeichern, die mittels erster Schalter mit ersten Anschlusspolen des elektrischen Energiespeichersystems zum Bereitstellen einer ersten elektrischen Spannung elektrisch verbindbar sind;
- Mindestens einen zweiten Anschlusspol zum Bereitstellen einer zweiten elektrischen Spannung;
- Mindestens einen Sensor zum Erfassen einer Spannungsgröße, die eine elektrische Spannung einer oder mehrerer elektrochemischer Energiespeicher repräsentiert, und/oder einer Temperaturgröße, die eine Temperatur einer oder mehrerer elektrochemischen Energiespeicher repräsentiert;
- Mindestens einen zweiten Schalter der mit mindestens einem der elektrochemischen Energiespeicher elektrisch verbunden ist, wobei mittels dem zweiten Schalter ein Pol des mindestens einen elektrochemischen Energiespeichers mit dem zweiten Anschlusspol zum Bereitstellen der zweiten elektrischen Spannung, die im Wesentlichen gleich oder niedriger als die erste elektrische Spannung ist, in Abhängigkeit der erfassten Spannungsgröße und/oder Temperaturgröße elektrisch verbindbar ist.
- Mindestens einen ersten Gleichspannungswandler, der mit dem zweiten Schalter elektrisch verbunden ist, wobei mittels dem zweiten Schalter der Pol des mindestens einen elektrochemischen Energiespeichers mit dem Gleichspannungswandler zum Bereitstellen der zweiten elektrischen Spannung an dem zweiten Anschlusspol, die niedriger als die erste elektrische Spannung ist, elektrisch verbindbar ist;
- Mindestens einen zweiten Gleichspannungswandler, der mit mindestens einem dritten Schalter elektrisch verbunden ist, wobei der dritte Schalter mit einem Pol des mindestens einen elektrochemischen Energiespeichers elektrisch verbunden und/oder dem zweiten Schalter elektrisch verbindbar ist, wobei mittels dem dritten Schalter der Pol des mindestens einen elektrochemischen Energiespeicherspeichers mit dem zweiten Gleichspannungswandler zum Bereitstellen einer dritten elektrischen Spannung an einem dritten Anschlusspol, die niedriger als die erste elektrische Spannung ist, elektrisch verbindbar ist;
- Mindestens einen weiteren Schalter, welcher mit einer elektrischen Verbindung zwischen dem ersten Schalter und dem ersten Gleichspannungswandler und einer elektrischen Verbindung zwischen dem zweiten Schalter und dem zweiten Gleichspannungswandler elektrisch verbunden ist, um eine Querversorgung der dritten Anschlüsse durch die zweiten Anschlüsse zu ermöglichen.

Dadurch weist das elektrische Energiespeichersystem zwei "positive" und mindestens einen gemeinsamen "negativen" elektrischen Anschluss auf. Die "positiven" Anschlüssen können durch die ersten und zweiten Schalter jeweils individuell von dem Pol des mindestens einen elektrochemischen Energiespeichers elektrisch getrennt werden. Die Trennung des mindestens zweiten Anschlusspol erfolgt erst bei einer höheren Temperatur, einer höheren Ladeschlussspannung und/oder einer tieferen Entladeschlussspannung des mindestens einen elektrochemischen Energiespeichers im Vergleich zu den ersten Anschlusspolen. Dadurch wird eine sichere Versorgung von allen notfallrelevanten Verbrauchern, insbesondere Niederspannungsverbraucher (<60V DC), auch bei einer partiellen Tiefentladung, einer geringfügigen Überhitzung und/oder einer Überladung des elektrochemischen Energiespeichersystems sichergestellt. Weiter kann dadurch eine zusätzliche klassische Blei-Säure Batterie im Fahrzeug entfallen, wodurch eine Reduzierung von Gewicht, Bauraum und Kosten erreicht wird.

Unter einem elektrischen Energiespeichersystem im Sinne der vorliegenden Erfindung ist ein Energiespeichersystem mit elektrochemischen Energiespeichern zu verstehen, denen entweder elektrische Energie entnommen werden kann oder zugeführt und entnommen werden kann. Ein elektrochemischer Energiespeicher ist insbesondere eine wiederaufladbare Batterie beziehungsweise ein Akkumulator. Vorteilhafterweise ist der elektrochemische Energiespeicher eine Lithium-Ionen-, Lithium-Schwefel-, Lithium-Luft-Batterie und/oder eine Batterie mit einem Feststoffelektrolyten.

Weitere vorteilhafte Ausführungsformen sind Gegenstand der Unteransprüche.

Das elektrochemische Energiespeichersystem umfasst ferner:
- Mindestens einen ersten Gleichspannungswandler, der mit dem zweiten Schalter elektrisch verbunden ist, wobei mittels dem zweiten Schalter der Pol des mindestens einen elektrochemischen Energiespeichers mit dem Gleichspannungswandler zum Bereitstellen der zweiten elektrischen Spannung an dem zweiten Anschlusspol, die niedriger als die erste elektrische Spannung ist, elektrisch verbindbar ist.

Dadurch kann vorteilhafterweise eine Versorgung von notfallrelevanten Verbrauchern aus einem Energiespeicher mit einer im Vergleich zu den Verbrauchern höheren elektrischen Spannung sichergestellt werden.

Das elektrochemische Energiespeichersystem umfasst ferner:
- Mindestens einen zweiten Gleichspannungswandler, der mit mindestens einem dritten Schalter elektrisch verbunden ist, wobei der dritte Schalter mit einem Pol des mindestens einen elektrochemischen Energiespeichers elektrisch verbunden und/oder dem zweiten Schalter elektrisch verbindbar ist, wobei mittels dem dritten Schalter der Pol des mindestens einen elektrochemischen Energiespeicherspeichers mit dem zweiten Gleichspannungswandler zum Bereitstellen einer dritten elektrischen Spannung an einem dritten Anschlusspol, die niedriger als die erste elektrische Spannung ist, elektrisch verbindbar ist.

Dadurch kann vorteilhafterweise eine Versorgung von verschiedenen notfallrelevanten Verbrauchern mit unterschiedlichen Spannungsniveaus aus einem Energiespeicher sichergestellt werden.

Unter einem Gleichspannungswandler ist insbesondere ein bidirektionaler Gleichspannungswandler (DC/DC-Umsetzer) zu verstehen. Gemäß einer vorteilhaften Ausgestaltung der Erfindung ist vorgesehen, dass die Gleichspannungswandler als Fly-Back-Konverter, als Forward-Konverter, Push-Pull-Konverter, Half-Bridge-Konverter, Full-Bridge-Konverter sowie als Resonanzwandler ausgeführt sein können. Die vorgenannten Konverter sind bekannte Gleichspannungswandler.

Unter einem Schalter ist insbesondere ein Relais und/oder Halbleiterschalter zu verstehen. Gemäß einer vorteilhaften Ausführungsform können die Schalter Leistungstransistoren, MOSFETs und/oder Thyristoren umfassen.

Die elektrische Spannung eines jeden der elektrochemischen Energiespeicher liegt im Bereich 0,1V ≤ X ≤ 60V, besonders bevorzugt im Bereich 2,8V ≤ X ≤ 4,2V.

Ein erfindungsgemäßes Verfahren zum Betreiben eines elektrischen Energiespeichersystems gemäß einem der vorhergehenden Ansprüche, umfassend folgende Schritte:
a) Erfassen einer Spannungsgröße, die eine elektrische Spannung einer oder mehrerer elektrochemischer Energiespeicher repräsentiert, und/oder einer Temperaturgröße, die eine Temperatur einer oder mehrerer elektrochemischen Energiespeicher repräsentiert;
b) Vergleichen der erfassten Spannungsgröße und/oder der Temperaturgröße mit vorgegebenen Schwellenwerten;
c) Ansteuern der Schalter und/oder des weiteren Schalters in Abhängigkeit des Vergleichs.

Das erfindungsgemäße Verfahren ist nicht auf die dargestellte Reihenfolge der Ausführungsform beschränkt. Vielmehr können die Schritte a bis c wiederholt, zeitlich nacheinander und/oder zumindest teilweise gleichzeitig erfolgen.

Das Ansteuern der Schalter umfasst ein Öffnen der ersten Schalter, wenn die erfasste Spannungsgröße einen Schwellenwert Ul,max überschreitet, die erfasste Temperaturgröße einen Schwellenwert T1,max überschreitet und/oder die erfasste Spannungsgröße einen Schwellenwert U1,min unterschreitet.

Das Ansteuern der Schalter umfasste ein Öffnen der zweiten Schalter, wenn die erfasste Spannungsgröße einen Schwellenwert U2,max überschreitet, die erfasste Temperaturgröße einen Schwellenwert T2,max überschreitet und/oder die erfasste Spannungsgröße einen Schwellenwert U2,min unterschreitet, wobei Ul,max < U2,max, T1,max < T2,max und U1,min > U2,min ist.

Vorteilhafterweise findet ein erfindungsgemäßes elektrisches Energiespeichersystem Verwendung für Elektrofahrzeuge, Hybridfahrzeuge, Plug-In-Hybridfahrzeuge, Luftfahrzeuge, Pedelecs oder E-Bikes, für portable Einrichtungen zur Telekommunikation oder Datenverarbeitung, für elektrische Handwerkzeuge oder Küchenmaschinen, sowie in stationären Speichern zur Speicherung insbesondere regenerativ gewonnener elektrischer Energie.

### Kurzbeschreibung der Figuren

Ausführungsbeispiele der Erfindung sind in der Zeichnung dargestellt und in der nachfolgenden Beschreibung näher erläutert.

Es zeigen:
Figur 1 eine schematische Darstellung eines Energiespeichersystems; und
Figur 2 eine schematische eines weiteren Energiespeichersystems;
Figur 3 eine schematische Darstellung einer Ausführungsform eines erfindungsgemäßen Energiespeichersystems.

### Detaillierte Beschreibung der Ausführungsbeispiele

Gleiche Bezugszeichen bezeichnen in allen Figuren gleiche Vorrichtungskomponenten.

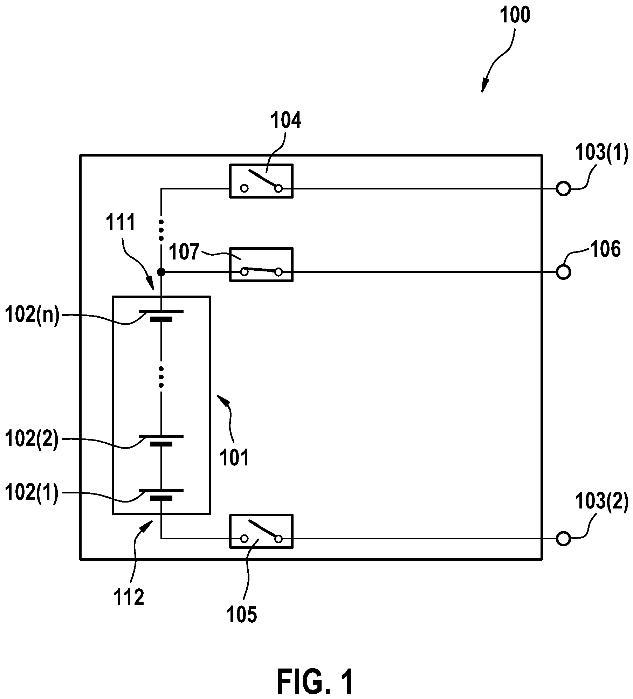

Figur 1 zeigt eine schematische Darstellung eines Energiespeichersystems 100. Das elektrische Energiespeichersystem 100 umfasst einen elektrochemischen Energiespeicher 101 mit einer Mehrzahl von elektrochemischen Energiespeichern 102(1), 102(2), 102(n) in Serienschaltung sowie erste Anschlusspole 103(1), 103(2) und einen zweiten Anschlusspol 106.

Ein erster Pol 111 des elektrochemischen Energiespeichers 101 ist mittels eines ersten Schalters 104 mit dem ersten Anschlusspol 103(1) und mittels eines zweiten Schalters 107 mit dem zweiten Anschlusspol 106 elektrisch verbindbar. Ein zweiter Pol 112 des elektrochemischen Energiespeichers 101 ist mittels eines Schalters 105 mit dem ersten Anschlusspol 103(2) elektrisch verbindbar. Dadurch kann eine erste elektrische Spannung an den ersten Anschlusspolen 103(1), 103(2) und eine zweite elektrische Spannung an dem zweiten Anschlusspol 106 bereitgestellt werden.

In der gezeigten Ausführungsform ist die an den ersten Anschlusspolen 103(1), 103(2) bereitgestellte elektrische Spannung im Wesentlichen identisch mit der an dem zweiten Anschlusspol 106 bereitgestellten zweiten elektrischen Spannung, beispielsweise 12V oder 48V.

Das elektrische Energiespeichersystem 100 umfasst ferner mindestens einen Sensor zum Erfassen einer Spannungsgröße, die eine elektrische Spannung einer oder mehrerer elektrochemischer Energiespeicher 102(1), 102(2), 102(n) repräsentiert, und/oder einer Temperaturgröße, die eine Temperatur einer oder mehrerer elektrochemischer Energiespeicher 102(1), 102(2), 102(n) repräsentiert.

Der erste Schalter 104 wird beispielsweise bei Überschreitung von vorgegebenen Schwellenwerten, beispielsweise bei Überschreitung einer maximalen elektrischen Spannung Ul,max und/oder einer maximal zulässigen Temperatur T1,max und/oder bei Unterschreitung einer minimalen elektrischen Spannung U1,min geöffnet.

Der zweite Schalter 107 wird beispielsweise bei Überschreitung von vorgegebenen Schwellenwerten, beispielsweise bei Überschreitung einer maximalen elektrischen Spannung U2,max und/oder einer maximal zulässigen Temperatur T2,max und/oder bei Unterschreitung einer minimalen elektrischen Spannung U2,min geöffnet, wobei für die Schwellenwerte die Bedingungen Ul,max < U2,max, T1,max < T2,max und U1,min > U2,min gelten.

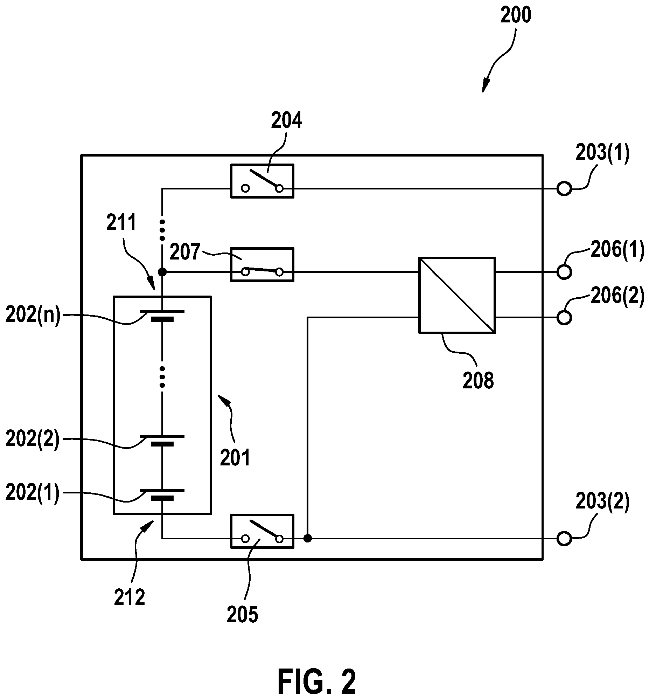

Figur 2 zeigt eine schematische Darstellung eines weiteren Energiespeichersystems 200. Das elektrische Energiespeichersystem 200 umfasst einen elektrochemischen Energiespeicher 201 mit einer Mehrzahl von elektrochemischen Energiespeichern 202(1), 202(2), 202(n) in Serienschaltung sowie erste Anschlusspole 203(1), 203(2) und zweite Anschlusspole 206(1), 206(2).

Ein erster Pol 211 des elektrochemischen Energiespeichers 201 ist mittels eines ersten Schalters 204 mit dem ersten Anschlusspol 203(1) elektrisch verbindbar. Ein zweiter Pol 212 des elektrochemischen Energiespeichers 201 ist mittels eines Schalters 205 mit dem ersten Anschlusspol 203(2) elektrisch verbindbar. Dadurch kann eine erste elektrische Spannung an den ersten Anschlusspolen 203(1), 203(2) bereitgestellt werden.

Der erste Pol 211 des elektrochemischen Energiespeichers 201 ist mittels eines zweiten Schalters 207 mit einem mit den zweiten Anschlusspolen 206(1), 206(2) elektrisch verbundenen Gleichspannungswandler 208 elektrisch verbindbar. Dadurch kann eine zweite elektrische Spannung an den zweiten Anschlusspolen 206(1), 206(2) bereitgestellt werden. Der Gleichspannungswandler 208 ist beispielsweise ein bidirektionaler DC/DC-Wandler. Die Leistungsfähigkeit des Gleichspannungswandler 208 begrenzt eine maximale Ausgangsleistung von allen an die zweiten Anschlusspole 206(1), 206(2) angeschlossenen notfallrelevanten Niederspannungsverbrauchern.

In der gezeigten Ausführungsform ist die an den zweiten Anschlusspolen 206(1), 206(2) bereitgestellte zweite elektrische Spannung, beispielsweise 12V, niedriger als die an den ersten Anschlusspolen 203(1), 203(2) bereitgestellte erste elektrische Spannung, beispielsweise 48V.

Das elektrische Energiespeichersystem 200 umfasst ferner mindestens einen Sensor zum Erfassen einer Spannungsgröße, die eine elektrische Spannung einer oder mehrerer elektrochemischer Energiespeicher 202(1), 202(2), 202(n) repräsentiert, und/oder einer Temperaturgröße, die eine Temperatur einer oder mehrerer elektrochemischer Energiespeicher 202(1), 202(2), 202(n) repräsentiert.

Der erste Schalter 204 wird beispielsweise bei Überschreitung von vorgegebenen Schwellenwerten, beispielsweise bei Überschreitung einer maximalen elektrischen Spannung Ul,max und/oder einer maximal zulässigen Temperatur T1,max und/oder bei Unterschreitung einer minimalen elektrischen Spannung U1,min geöffnet.

Der zweite Schalter 207 wird beispielsweise bei Überschreitung von vorgegebenen Schwellenwerten, beispielsweise bei Überschreitung einer maximalen elektrischen Spannung U2,max und/oder maximal zulässigen Temperatur T2,max und/oder bei Unterschreitung einer minimalen elektrischen Spannung U2,min geöffnet, wobei für die Schwellenwerte die Bedingungen Ul,max < U2,max, T1,max < T2,max und U1,min > U2,min gelten.

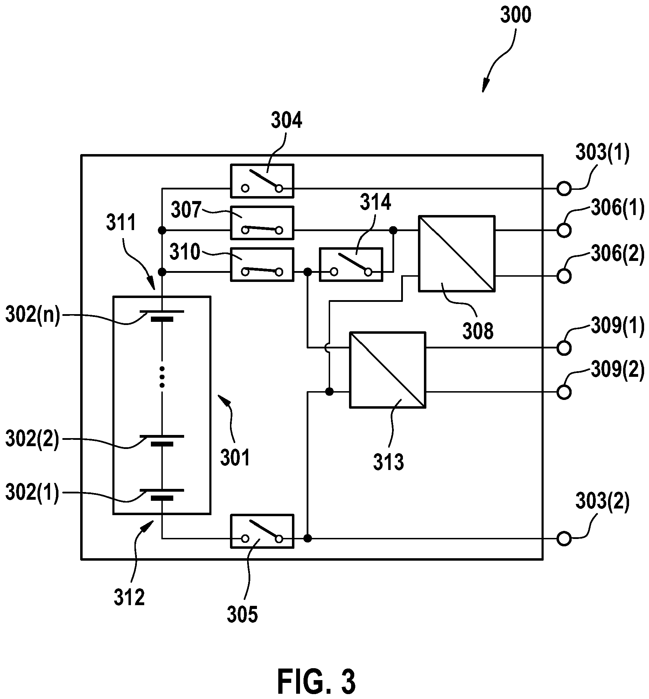

Figur 3 zeigt eine schematische Darstellung einer Ausführungsform eines erfindungsgemäßen Energiespeichersystems 300. Das elektrische Energiespeichersystem 300 umfasst einen elektrochemischen Energiespeicher 301 mit einer Mehrzahl von elektrochemischen Energiespeichern 302(1), 302(2), 302(n) in Serienschaltung sowie erste Anschlusspole 303(1), 303(2), zweite Anschlusspole 306(1), 306(2) und dritte Anschlusspole 309(1), 309(2).

Ein erster Pol 311 des elektrochemischen Energiespeichers 301 ist mittels eines ersten Schalters 304 mit dem ersten Anschlusspol 303(1) elektrisch verbindbar. Ein zweiter Pol 312 des elektrochemischen Energiespeichers 301 ist mittels eines Schalters 305 mit dem ersten Anschlusspol 303(2) elektrisch verbindbar. Dadurch kann eine erste elektrische Spannung an den ersten Anschlusspolen 303(1), 303(2) bereitgestellt werden.

Der erste Pol 311 des elektrochemischen Energiespeichers 301 ist mittels eines zweiten Schalters 307 mit einem mit den zweiten Anschlusspolen 306(1), 306(2) elektrisch verbundenen ersten Gleichspannungswandler 308 elektrisch verbindbar. Dadurch kann eine zweite elektrische Spannung an den zweiten Anschlusspolen 306(1), 306(2) bereitgestellt werden. Der erste Gleichspannungswandler 308 ist beispielsweise ein bidirektionaler DC/DC-Wandler.

Der erste Pol 311 des elektrochemischen Energiespeichers 301 ist mittels eines dritten Schalters 310 mit einem mit den dritten Anschlusspolen 309(1), 309(2) elektrisch verbundenen zweiten Gleichspannungswandler 313 elektrisch verbindbar. Dadurch kann eine dritte elektrische Spannung an den dritten Anschlusspolen 309(1), 309(2) bereitgestellt werden. Der zweite Gleichspannungswandler 313 ist beispielsweise ein bidirektionaler DC/DC-Wandler.

Durch die Gleichspannungswandler 308, 313 kann eine Versorgung von notfallrelevanten Verbrauchern auf einem anderen Spannungsniveau an den zusätzlichen zweiten Anschlusspolen 306(1), 306(2) und/oder dritten Anschlusspolen, 309(1), 309(2) sichergestellt werden.

In der gezeigten Ausführungsform ist die an den dritten Anschlusspolen 309(1), 309(2) bereitgestellte dritte elektrische Spannung, beispielsweise 12V für eine Warnblinkanlage, niedriger als die an den zweiten Anschlusspolen 306(1), 306(2) bereitgestellte zweite elektrische Spannung, beispielsweise 48V für Sicherheitsfunktionen und Komponenten für autonomes Fahren, und niedriger als die an den ersten Anschlusspolen 303(1), 303(2) bereitgestellte erste elektrische Spannung, beispielsweise 370V für einen Traktionsantrieb.

Das elektrische Energiespeichersystem 300 umfasst ferner mindestens einen Sensor zum Erfassen einer Spannungsgröße, die eine elektrische Spannung einer oder mehrerer elektrochemischer Energiespeicher 302(1), 302(2), 302(n) repräsentiert, und/oder einer Temperaturgröße, die eine Temperatur einer oder mehrerer elektrochemischer Energiespeicher 302(1), 302(2), 302(n) repräsentiert.

Der erste Schalter 304 wird beispielsweise bei Überschreitung von vorgegebenen Schwellenwerten, beispielsweise bei Überschreitung einer maximalen elektrischen Spannung Ul,max und/oder maximal zulässigen Temperatur T1,max, und/oder bei Unterschreitung U1,min von vorgegebenen Schwellenwerten, beispielsweise bei Unterschreitung einer minimalen elektrischen Spannung, geöffnet.

Der zweite Schalter 307 wird beispielsweise bei Überschreitung von vorgegebenen Schwellenwerten, beispielsweise bei Überschreitung einer maximalen elektrischen Spannung U2,max und/oder maximal zulässigen Temperatur T2,max, und/oder bei Unterschreitung von vorgegebenen Schwellenwerten, beispielsweise bei Unterschreitung einer minimalen elektrischen Spannung U2,min, geöffnet, wobei für die Schwellenwerte die Bedingungen Ul,max < U2,max, T1,max < T2,max und U1,min > U2,min gelten.

Der dritte Schalter 310 wird beispielsweise bei Überschreitung von vorgegebenen Schwellenwerten, beispielsweise bei Überschreitung einer maximalen elektrischen Spannung U3,max und/oder maximal zulässigen Temperatur T3,max, und/oder bei Unterschreitung von vorgegebenen Schwellenwerten, beispielsweise bei Unterschreitung einer minimalen elektrischen Spannung U3,min, geöffnet, wobei für die Schwellenwerte die Bedingungen Ul,max < U2,max < U3,max, T1,max < T2,max < T3,max und U1,min > U2,min > U3,min gelten.

In der gezeigten Ausführungsform umfasst das elektrochemische Energiespeichersystem 300 einen weiteren Schalter 314, der bei geöffnetem zweiten Schalter 307 und geöffnetem dritten Schalter 310 eine Querversorgung der dritten Anschlüsse 309(1), 309(2) durch die zweiten Anschlüsse 306(1), 306(2) ermöglicht, falls an den zweiten Anschlüssen 306(1), 306(2) eine weitere Stromquelle angeschlossen ist.

## Patentansprüche

1. Elektrisches Energiespeichersystem (100, 200, 300) umfassend
- Eine Mehrzahl von elektrochemischen Energiespeichern (102(1), 102(2), 102(n), 201(1), 202(2), 202(n), 302(1), 302(2), 302(n)), die mittels erster Schalter (104) mit ersten Anschlusspolen (103(1), 103(2), 203(1), 203(2), 303(1), 303(2)) des elektrischen Energiespeichersystems (100, 200, 300) zum Bereitstellen einer ersten elektrischen Spannung elektrisch verbindbar sind;
- Mindestens einen zweiten Anschlusspol (106, 206(1), 206(2), 306(1), 306(2)) zum Bereitstellen einer zweiten elektrischen Spannung;
- Mindestens einen Sensor zum Erfassen einer Spannungsgröße, die eine elektrische Spannung einer oder mehrerer elektrochemischer Energiespeicher (102(1), 102(2), 102(n), 201(1), 202(2), 202(n), 302(1), 302(2), 302(n)) repräsentiert, und/oder einer Temperaturgröße, die eine Temperatur einer oder mehrerer elektrochemischen Energiespeicher (102(1), 102(2), 102(n), 201(1), 202(2), 202(n), 302(1), 302(2), 302(n)) repräsentiert;
- Mindestens einen zweiten Schalter (107, 207, 307) der mit mindestens einem der elektrochemischen Energiespeicher (102(1), 102(2), 102(n), 201(1), 202(2), 202(n), 302(1), 302(2), 302(n)) elektrisch verbunden ist, wobei mittels dem zweiten Schalter (107, 207, 307) ein Pol (111, 211, 311) des mindestens einen elektrochemischen Energiespeichers (102(1), 102(2), 102(n), 201(1), 202(2), 202(n), 302(1), 302(2), 302(n)) mit dem zweiten Anschlusspol (106, 206(1), 206(2), 306(1), 306(2)) zum Bereitstellen der zweiten elektrischen Spannung, die im Wesentlichen gleich oder niedriger als die erste elektrische Spannung ist, in Abhängigkeit der erfassten Spannungsgröße und/oder Temperaturgröße elektrisch verbindbar ist;
- Mindestens einen ersten Gleichspannungswandler (208, 308), der mit dem zweiten Schalter (207, 307) elektrisch verbunden ist, wobei mittels dem zweiten Schalter (207, 307) der Pol (211, 311) des mindestens einen elektrochemischen Energiespeichers (102(1), 102(2), 102(n), 201(1), 202(2), 202(n), 302(1), 302(2), 302(n)) mit dem Gleichspannungswandler (208, 308) zum Bereitstellen der zweiten elektrischen Spannung an dem zweiten Anschlusspol (206(1), 206(2), 306(1), 306(2)), die niedriger als die erste elektrische Spannung ist, elektrisch verbindbar ist;
- Mindestens einen zweiten Gleichspannungswandler (313), der mit mindestens einem dritten Schalter (310) elektrisch verbunden ist, wobei der dritte Schalter (310) mit einem Pol (311) des mindestens einen elektrochemischen Energiespeichers (102(1), 102(2), 102(n), 201(1), 202(2), 202(n), 302(1), 302(2), 302(n)) elektrisch verbunden und/oder dem zweiten Schalter (307) elektrisch verbindbar ist, wobei mittels dem dritten Schalter (310) der Pol (311) des mindestens einen elektrochemischen Energiespeicherspeichers (102(1), 102(2), 102(n), 201(1), 202(2), 202(n), 302(1), 302(2), 302(n)) mit dem zweiten Gleichspannungswandler (313) zum Bereitstellen einer dritten elektrischen Spannung an einem dritten Anschlusspol (309(1), 309(2)), die niedriger als die erste elektrische Spannung ist, elektrisch verbindbar ist;
- Mindestens einen weiteren Schalter (314), welcher mit einer elektrischen Verbindung zwischen dem ersten Schalter (307) und dem ersten Gleichspannungswandler (308) und einer elektrischen Verbindung zwischen dem zweiten Schalter (310) und dem zweiten Gleichspannungswandler (313) elektrisch verbunden ist, um eine Querversorgung der dritten Anschlüsse (309(1), 309(2)) durch die zweiten Anschlüsse (306(1), 306(2)) zu ermöglichen.

2. Elektrochemisches Energiespeichersystem (100, 200, 300) nach Anspruch 1, wobei der Gleichspannungswandler (208, 308, 313) ein bidirektionaler Gleichspannungswandler ist.

3. Elektrochemisches Energiespeichersystem (100, 200, 300) nach einem der vorhergehenden Ansprüche, **dadurch gekennzeichnet, dass** die Schalter (104, 105, 107, 204, 205, 207, 304, 305, 307, 310, 314) Relais und/oder Halbleiterschalter sind und Leistungstransistoren, MOSFETs und/oder Thyristoren umfassen.

4. Elektrisches Energiespeichersystem (100, 200, 300) gemäß einem der vorhergehenden Ansprüche, wobei die elektrische Spannung eines jeden der elektrochemischen Energiespeicher (102(1), 102(2), 102(n), 201(1), 202(2), 202(n), 302(1), 302(2), 302(n)) im Bereich 0,1V ≤ X ≤ 60V, besonders bevorzugt im Bereich 2,8V ≤ X ≤ 4,2V, liegt.

5. Verfahren zum Betreiben eines elektrischen Energiespeichersystems (100, 200, 300) gemäß einem der vorhergehenden Ansprüche, umfassend folgende Schritte:
a) Erfassen einer Spannungsgröße, die eine elektrische Spannung einer oder mehrerer elektrochemischer Energiespeicher (102(1), 102(2), 102(n), 201(1), 202(2), 202(n), 302(1), 302(2), 302(n)) repräsentiert, und/oder einer Temperaturgröße, die eine Temperatur einer oder mehrerer elektrochemischen Energiespeicher (102(1), 102(2), 102(n), 201(1), 202(2), 202(n), 302(1), 302(2), 302(n)) repräsentiert;
b) Vergleichen der erfassten Spannungsgröße und/oder der Temperaturgröße mit vorgegebenen Schwellenwerten (Ul,max; T1,max; Ul,min; U2,max; T2,max; U2,max);
c) Ansteuern der Schalter (104, 105, 107, 204, 205, 207, 304, 305, 307, 310) und/oder des weiteren Schalters (314) in Abhängigkeit des Vergleichs.

6. Verfahren zum Betreiben eines elektrischen Energiespeichersystems (100, 200, 300) gemäß Anspruch 5, wobei das Ansteuern ein Öffnen der ersten Schalter (104, 204, 304) umfasst, wenn die erfasste Spannungsgröße einen Schwellenwert Ul,max überschreitet, die erfasste Temperaturgröße einen Schwellenwert T1,max überschreitet und/oder die erfasste Spannungsgröße einen Schwellenwert U1,min unterschreitet;

7. Verfahren zum Betreiben eines elektrischen Energiespeichersystems (100, 200, 300) gemäß einem der Ansprüche 5 oder 6, wobei das Ansteuern ein Öffnen der zweiten Schalter (107, 207, 307) umfasst, wenn die erfasste Spannungsgröße einen Schwellenwert U2,max überschreitet, die erfasste Temperaturgröße einen Schwellenwert T2,max überschreitet und/oder die erfasste Spannungsgröße einen Schwellenwert U2,min unterschreitet, wobei Ul,max < U2,max, T1,max < T2,max und U1,min > U2,min ist.

8. Verfahren zum Betreiben eines elektrischen Energiespeichersystems (100, 200, 300) gemäß einem der Ansprüche 6 bis 7, wobei das Ansteuern ein Schließen des weiteren Schalters (314) umfasst, wenn die zweiten Schalter (307) und dritten Schalter (310) geöffnet sind, um eine Querversorgung der dritten Anschlüsse (309(1), 309(2)) durch die zweiten Anschlüsse (306(1), 306(2)) zu ermöglichen, falls an den zweiten Anschlüssen (306(1), 306(2)) eine weitere Stromquelle angeschlossen ist [Seite 14, Zeilen 20 ff.].

9. Verwendung eines elektrischen Energiespeichersystems (100, 200, 300) gemäß einem der Ansprüche 1 bis 4 für Elektrofahrzeuge, Hybridfahrzeuge, Plug-In-Hybridfahrzeuge, Luftfahrzeuge, Pedelecs oder E-Bikes, für portable Einrichtungen zur Telekommunikation oder Datenverarbeitung, für elektrische Handwerkzeuge oder Küchenmaschinen, sowie in stationären Speichern zur Speicherung insbesondere regenerativ gewonnener elektrischer Energie.

## Claims

1. Electrical energy storage system (100, 200, 300) comprising
- a plurality of electrochemical energy storage units (102(1), 102(2), 102(n), 201(1), 202(2), 202(n), 302(1), 302(2), 302(n)), which are electrically connectable by means of first switches (104) to first terminal poles (103(1), 103(2), 203(1), 203(2), 303(1), 303(2)) of the electrical energy storage system (100, 200, 300) for providing a first electrical voltage;
- at least one second terminal pole (106, 206(1), 206(2), 306(1), 306(2)) for providing a second electrical voltage;
- at least one sensor for detecting a voltage variable representing an electrical voltage of one or more electrochemical energy storage units (102(1), 102(2), 102(n), 201(1), 202(2), 202(n), 302(1), 302(2), 302(n)), and/or a temperature variable representing a temperature of one or more electrochemical energy storage units (102(1), 102(2), 102(n), 201(1), 202(2), 202(n), 302(1), 302(2), 302(n));
- at least one second switch (107, 207, 307), which is electrically connected to at least one of the electrochemical energy storage units (102(1), 102(2), 102(n), 201(1), 202(2), 202(n), 302(1), 302(2), 302(n)), wherein, by means of the second switch (107, 207, 307), a pole (111, 211, 311) of the at least one electrochemical energy storage unit (102(1), 102(2), 102(n), 201(1), 202(2), 202(n), 302(1), 302(2), 302(n)) is electrically connectable to the second terminal pole (106, 206(1), 206(2), 306(1), 306(2)) for providing the second electrical voltage, which is substantially equal to or less than the first electrical voltage, depending on the detected voltage variable and/or temperature variable;
- at least one first DC/DC converter (208, 308), which is electrically connected to the second switch (207, 307), wherein, by means of the second switch (207, 307), the pole (211, 311) of the at least one electrochemical energy storage unit (102(1), 102(2), 102(n), 201(1), 202(2), 202(n), 302(1), 302(2), 302(n)) is electrically connectable to the DC/DC converter (208, 308) for providing the second electrical voltage at the second terminal pole (206(1), 206(2), 306(1), 306(2)), said second electrical voltage being lower than the first electrical voltage;
- at least one second DC/DC converter (313), which is electrically connected to at least one third switch (310), wherein the third switch (310) is electrically connected to a pole (311) of the at least one electrochemical energy storage unit (102(1), 102(2), 102(n), 201(1), 202(2), 202(n), 302(1), 302(2), 302(n)) and/or is electrically connectable to the second switch (307), wherein, by means of the third switch (310), the pole (311) of the at least one electrochemical energy storage unit (102(1), 102(2), 102(n), 201(1), 202(2), 202(n), 302(1), 302(2), 302(n)) is electrically connectable to the second DC/DC converter (313) for providing a third electrical voltage at a third terminal pole (309(1), 309(2)), said third electrical voltage being lower than the first electrical voltage;
- at least one further switch (314), which is electrically connected to an electrical connection between the first switch (307) and the first DC/DC converter (308) and an electrical connection between the second switch (310) and the second DC/DC converter (313) in order to enable a shunt supply of the third terminals (309(1), 309(2)) by the second terminals (306(1), 306(2)).

2. Electrochemical energy storage system (100, 200, 300) according to Claim 1, wherein the DC/DC converter (208, 308, 313) is a bidirectional DC/DC converter.

3. Electrochemical energy storage system (100, 200, 300) according to either of the preceding claims, **characterized in that** the switches (104, 105, 107, 204, 205, 207, 304, 305, 307, 310, 314) are relays and/or semiconductor switches and comprise power transistors, MOSFETs and/or thyristors.

4. Electrical energy storage system (100, 200, 300) according to any of the preceding claims, wherein the electrical voltage of each of the electrochemical energy storage units (102(1), 102(2), 102(n), 201(1), 202(2), 202(n), 302(1), 302(2), 302(n)) is in the range of 0.1 V ≤ X ≤ 60 V, particularly preferably in the range of 2.8 V ≤ X ≤ 4.2 V.

5. Method for operating an electrical energy storage system (100, 200, 300) according to any of the preceding claims, comprising the following steps:
a) detecting a voltage variable representing an electrical voltage of one or more electrochemical energy storage units (102(1), 102(2), 102(n), 201(1), 202(2), 202(n), 302(1), 302(2), 302(n)), and/or a temperature variable representing a temperature of one or more electrochemical energy storage units (102(1), 102(2), 102(n), 201(1), 202(2), 202(n), 302(1), 302(2), 302(n));
b) comparing the detected voltage variable and/or the temperature variable with predefined threshold values (U1,max; T1,max; U1,min; U2,max; T2,max; U2,max);
c) driving the switches (104, 105, 107, 204, 205, 207, 304, 305, 307, 310) and/or the further switch (314) depending on the comparison.

6. Method for operating an electrical energy storage system (100, 200, 300) according to Claim 5, wherein the driving comprises opening the first switches (104, 204, 304) if the detected voltage variable exceeds a threshold value U1,max, the detected temperature variable exceeds a threshold value T1,max and/or the detected voltage variable undershoots a threshold value U1,min.

7. Method for operating an electrical energy storage system (100, 200, 300) according to either of Claims 5 and 6, wherein the driving comprises opening the second switches (107, 207, 307) if the detected voltage variable exceeds a threshold value U2,max, the detected temperature variable exceeds a threshold value T2,max and/or the detected voltage variable undershoots a threshold value U2,min, wherein Ul,max < U2,max, T1,max < T2,max and U1,min > U2,min.

8. Method for operating an electrical energy storage system (100, 200, 300) according to either of Claims 6 and 7, wherein the driving comprises closing the further switch (314) if the second switches (307) and third switches (310) have been opened, in order to enable a shunt supply of the third terminals (309(1), 309(2)) by the second terminals (306(1), 306(2)) if a further current source is connected to the second terminals (306(1), 306(2)) [page 14, line 20 et seq.].

9. Use of an electrical energy storage system (100, 200, 300) according to any of Claims 1 to 4 for electric vehicles, hybrid vehicles, plug-in hybrid vehicles, aircraft, pedelecs or e-bikes, for portable devices for telecommunications or data processing, for electrical handtools or kitchen appliances, and in stationary storage units for storing in particular regeneratively obtained electrical energy.

## Revendications

1. Système d'accumulation d'énergie électrique (100, 200, 300), comprenant
- une pluralité d'accumulateurs d'énergie électrochimiques (102(1), 102(2), 102(n), 201(1), 202(2), 202(n), 302(1), 302(2), 302(n)) qui peuvent être reliés électriquement au moyen de premiers commutateurs (104) à des premiers pôles de raccordement (103(1), 103(2), 203(1), 203(2), 303(1), 303(2)) du système d'accumulation d'énergie électrique (100, 200, 300) pour fournir une première tension électrique ;
- au moins un deuxième pôle de raccordement (106, 206(1), 206(2), 306(1), 306(2)) pour fournir une deuxième tension électrique ;
- au moins un capteur pour détecter une grandeur de tension qui représente une tension électrique d'un ou de plusieurs accumulateurs d'énergie électrochimiques (102(1), 102(2), 102(n), 201(1), 202(2), 202(n), 302(1), 302(2), 302(n)) et/ou pour détecter une grandeur de température qui représente une température d'un ou de plusieurs accumulateurs d'énergie électrochimiques (102(1), 102(2), 102(n), 201(1), 202(2), 202(n), 302(1), 302(2), 302(n)) ;
- au moins un deuxième commutateur (107, 207, 307) qui est relié électriquement à au moins l'un des accumulateurs d'énergie électrochimiques (102(1), 102(2), 102(n), 201(1), 202(2), 202(n), 302(1), 302(2), 302(n)), dans lequel le deuxième commutateur (107, 207, 307) permet de relier électriquement un pôle (111, 211, 311) dudit au moins un accumulateur d'énergie électrochimique (102(1), 102(2), 102(n), 201(1), 202(2), 202(n), 302(1), 302(2), 302(n)) au deuxième pôle de raccordement (106, 206(1), 206(2), 306(1), 306(2)) pour fournir la deuxième tension électrique qui est substantiellement identique ou inférieure à la première tension électrique, en fonction de la grandeur de tension et/ou de la grandeur de température détectée(s) ;
- au moins un premier convertisseur CC/CC (208, 308) qui est relié électriquement au deuxième commutateur (207, 307), dans lequel le deuxième commutateur (207, 307) permet de relier électriquement le pôle (211, 311) dudit au moins un accumulateur d'énergie électrochimique (102(1), 102(2), 102(n), 201(1), 202(2), 202(n), 302(1), 302(2), 302(n)) au convertisseur CC/CC (208, 308) pour fournir la deuxième tension électrique au deuxième pôle de raccordement (206(1), 206(2), 306(1), 306(2)) qui est inférieure à la première tension électrique ;
- au moins un deuxième convertisseur CC/CC (313) qui est relié électriquement à au moins un troisième commutateur (310), dans lequel le troisième commutateur (310) peut être électriquement à un pôle (311) dudit au moins un accumulateur d'énergie électrochimique (102(1), 102(2), 102(n), 201(1), 202(2), 202(n), 302(1), 302(2), 302(n)) et/ou peut être relié électriquement au deuxième commutateur (307), dans lequel le troisième commutateur (310) permet de relier électriquement le pôle (311) dudit au moins un accumulateur d'énergie électrochimique (102(1), 102(2), 102(n), 201(1), 202(2), 202(n), 302(1), 302(2), 302(n)) au deuxième convertisseur CC/CC (313) pour fournir une troisième tension électrique au niveau d'un troisième pôle de raccordement (309(1), 309(2)) qui est inférieure à la première tension électrique ;
- au moins un commutateur supplémentaire (314) qui est relié électriquement par une liaison électrique entre le premier commutateur (307) et le premier convertisseur CC/CC (308) et une liaison électrique entre le deuxième commutateur (310) et le deuxième convertisseur CC/CC (313) pour permettre une alimentation transversale des troisièmes bornes (309(1), 309(2)) par les deuxièmes bornes (306(1), 306(2)).

2. Système d'accumulation d'énergie électrochimique (100, 200, 300) selon la revendication 1, dans lequel le convertisseur CC/CC (208, 308, 313) est un convertisseur CC/CC bidirectionnel.

3. Système d'accumulation d'énergie électrochimique (100, 200, 300) selon l'une quelconque des revendications précédentes, **caractérisé en ce que** les commutateurs (104, 105, 107, 204, 205, 207, 304, 305, 307, 310, 314) sont des relais et/ou des commutateurs à semi-conducteur et comprennent des transistors de puissance, des MOSFET et/ou des thyristors.

4. Système d'accumulation d'énergie électrique (100, 200, 300) selon l'une quelconque des revendications précédentes, dans lequel la tension électrique de chacun des accumulateurs d'énergie électrochimiques (102(1), 102(2), 102(n), 201(1), 202(2), 202(n), 302(1), 302(2), 302(n)) se situe dans la plage de 0,1 V ≤ X ≤ 60 V, de manière particulièrement préférée dans la plage de 2,8 V ≤ X ≤ 4,2 V.

5. Procédé permettant de faire fonctionner un système d'accumulation d'énergie électrique (100, 200, 300) selon l'une quelconque des revendications précédentes, comprenant les étapes suivantes consistant à :
a) détecter une grandeur de tension qui représente une tension électrique d'un ou de plusieurs accumulateurs d'énergie électrochimiques (102(1), 102(2), 102(n), 201(1), 202(2), 202(n), 302(1), 302(2), 302(n)) et/ou pour détecter une grandeur de température qui représente une température d'un ou de plusieurs accumulateurs d'énergie électrochimiques (102(1), 102(2), 102(n), 201(1), 202(2), 202(n), 302(1), 302(2), 302(n)) ;
b) comparer la grandeur de tension et/ou la grandeur de température détectée(s) avec des valeurs seuil prédéfinies (U1,max ; T1,max ; U1,min ; U2,max ; T2,max ; U2,max) ;
c) piloter les commutateurs (104, 105, 107, 204, 205, 207, 304, 305, 307, 310) et/ou le commutateur supplémentaire (314) en fonction de la comparaison.

6. Procédé permettant de faire fonctionner un système d'accumulation d'énergie électrique (100, 200, 300) selon la revendication 5, dans lequel le pilotage comprend une ouverture des premiers commutateurs (104, 204, 304) lorsque la grandeur de tension détectée dépasse une valeur seuil U1,max, la grandeur de température détectée dépasse une valeur seuil T1,max, et/ou la grandeur de tension détectée soupasse une valeur seuil U1,min.

7. Procédé permettant de faire fonctionner un système d'accumulation d'énergie électrique (100, 200, 300) selon l'une quelconque des revendications 5 ou 6, dans lequel le pilotage comprend une ouverture des deuxièmes commutateurs (107, 207, 307) lorsque la grandeur de tension détectée dépasse une valeur seuil U2,max, la grandeur de température détectée dépasse une valeur seuil T2,max, et/ou la grandeur de tension détectée soupasse une valeur seuil U2,min, où U1,max < U2,max, T1,max < T2,max et U1,min > U2,min.

8. Procédé permettant de faire fonctionner un système d'accumulation d'énergie électrique (100, 200, 300) selon l'une quelconque des revendications 6 à 7, dans lequel le pilotage comprend une fermeture du commutateur supplémentaire (314) lorsque les deuxièmes commutateurs (307) et les troisièmes commutateurs (310) sont ouverts pour permettre une alimentation transversale des troisièmes raccordements (309(1), 309(2)) par les deuxièmes raccordements (306(1), 306(2)) si une source d'alimentation supplémentaire est raccordée aux deuxièmes raccordements (306(1), 306(2)) [page 14, lignes 20 et suivantes.].

9. Utilisation d'un système d'accumulation d'énergie électrique (100, 200, 300) selon l'une quelconque des revendications 1 à 4 pour des véhicules électriques, des véhicules hybrides, des véhicules hybrides rechargeables, des aéronefs, des pedelecs ou vélos électriques, pour des dispositifs portatifs servant aux télécommunications ou au traitement de données, pour des outils à main électriques ou des appareils électroménagers, ainsi que dans des accumulateurs stationnaires pour accumuler de l'énergie électrique, obtenue en particulier par régénération.
